# EUROPEAN PATENT APPLICATION

(11) **EP 4 391 206 A1**
(43) Date of publication of application: **26.06.2024**
(21) Application number: 22925762.1
(22) Date of filing: 29.12.2022
(51) Int. Cl.: H01M 50/536

(54) **ELECTRIC DEVICE, BATTERY, BATTERY CELL AND MANUFACTURING METHOD THEREFOR**

(30) Priority: 10.02.2022 CN 202210124365
(71) Applicant: Contemporary Amperex Technology Co., Limited, Ningde, Fujian 352100 (CN)
(72) Inventor: YU, Chunpeng, Ningde, Fujian 352100 (CN); LI, Quanguo, Ningde, Fujian 352100 (CN); LIU, Qian, Ningde, Fujian 352100 (CN); YE, Yonghuang, Ningde, Fujian 352100 (CN); XIAO, Dejun, Ningde, Fujian 352100 (CN)
(74) Representative: Gong, Jinping
(86) International application number: PCT/CN2022/143452
(87) International publication number: WO 2023/151413

(57) **Abstract**

This application relates to an electric device, a battery, and a battery unit and a manufacturing method thereof. The battery unit includes a housing (100), electrode terminals (200), multiple battery cells (300), and current collecting members (400). The electrode terminals (200) are provided at the top of the housing (100). The multiple battery cells (300) are accommodated within the housing (100). At least two of the battery cells (300) have different heights, and the current collecting members (400) are provided within an accommodation space formed by a main body (310) of a shortest battery cell (300) and the top of the housing (100). The battery includes the foregoing battery unit. The electric device includes the foregoing battery. The manufacturing method of the battery unit includes providing current collecting members (400) within an accommodation space formed by a main body (310) of a shortest battery cell (300) and the top of the housing (100). The electric device, battery, and battery unit and manufacturing method thereof improve space utilization and energy density.

## Description

### CROSS-REFERENCE TO RELATED APPLICATIONS

This application refers to Chinese Patent Application No. 202210124365.X, filed on February 10, 2022 and entitled "ELECTRIC DEVICE, BATTERY, AND BATTERY UNIT AND MANUFACTURING METHOD THEREOF", which is incorporated herein by reference in its entirety.

### TECHNICAL FIELD

This application relates to the technical field of electric vehicle batteries, and more specifically, to an electric device, a battery, and a battery unit and a manufacturing method thereof.

### BACKGROUND

Electric vehicle batteries are rechargeable batteries that serve as power source for electric devices such as new energy vehicles, and are widely used in the field of new energy vehicles.

With popularization and promotion of new energy vehicles, charge and discharge performance, endurance, and the like of new energy vehicles have attracted increasing attention. When internal space utilization of batteries is low, a considerable amount of energy density is lost, affecting the performance of batteries.

### SUMMARY

In view of this, this application provides an electric device, a battery, and a battery unit and a manufacturing method thereof.

The battery unit includes a housing, electrode terminals, multiple battery cells, and current collecting members. The electrode terminals are provided at the top of the housing. The multiple battery cells are accommodated within the housing. Each of the battery cells includes a main body and tabs connected to the main body. The current collecting members include tab connection portions and terminal connection portions, where the tab connection portion is configured to connect to the tab, and the terminal connection portion is configured to connect to the electrode terminal. At least two of the battery cells have different heights, and the current collecting members are provided within an accommodation space formed by a main body of a shortest battery cell and the top of the housing. In the battery unit, the at least two battery cells have a height difference. Providing the current collecting members within the accommodation space formed by the main body of the shortest battery cell and the top of the housing can make full use of the space of the battery unit in the height direction, thereby improving the space utilization and energy density.

In an embodiment, the battery cells are arranged side by side along a width direction of the housing, two outermost battery cells belong to a first battery cell group, and battery cells between the two outermost battery cells belong to a second battery cell group. In this arrangement, the battery cells are arranged side by side in the same direction, reducing the space occupied and helping to improve the space utilization of the housing.

In an embodiment, the battery cells in the first battery cell group have an equal height, the battery cells in the second battery cell group have an equal height, and the height of the second battery cell group is not equal to the height of the first battery cell group. In this arrangement, there is a height difference between the two groups of battery cells. Providing the current collecting members within the accommodation space formed by the shorter battery cell group and the top of the housing can improve the space utilization and energy density of the battery unit, and facilitates production and processing of battery cells in a same battery cell group, thereby helping to reduce processing costs.

In an embodiment, an absolute value of a height difference between the second battery cell group and the first battery cell group is at most 20 mm. In this arrangement, the accommodation space can effectively accommodate the current collecting members, and the overall volume of the battery unit is not excessively large.

In an embodiment, the height of the second battery cell group is lower than the height of the first battery cell group, and the current collecting members are provided within an accommodation space formed by the second battery cell group and the top of the housing. In this arrangement, providing the current collecting members within the accommodation space formed by the second battery cell group and the top of the housing can make full use of the space of the battery unit in the height direction, thereby improving the space utilization and energy density.

In an embodiment, the tabs include positive electrode tabs and negative electrode tabs spaced along a length direction of the housing, where the positive electrode tab of the battery cell is bent and connected to the tab connection portion of one current collecting member, and the negative electrode tab of the battery cell is bent and connected to the tab connection portion of another current collecting member, with the two current collecting members spaced along a length direction of the housing. In this arrangement, the tabs of the battery cells can be smoothly connected to the current collecting members.

In an embodiment, the height of the second battery cell group is higher than the height of the first battery cell group, the current collecting members are provided within an accommodation space formed by the first battery cell group and the top of the housing, and the accommodation space is divided by the first battery cell group into a first accommodation space and a second accommodation space. In this arrangement, providing the current collecting members within the accommodation space formed by the first battery cell group and the top of the housing can make full use of the space of the battery unit in the height direction, thereby improving the space utilization and energy density.

In an embodiment, the current collecting members include a first current collecting member, a second current collecting member, a third current collecting member, and a fourth current collecting member, and the tabs include positive electrode tabs and negative electrode tabs spaced along a length direction of the housing; where positive electrode tabs of some battery cells are bent and connected to the tab connection portion of the first current collecting member, positive electrode tabs of the remaining battery cells are bent and connected to the tab connection portion of the second current collecting member, negative electrode tabs of some battery cells are bent and connected to the tab connection portion of the third current collecting member, and negative electrode tabs of the remaining battery cells are bent and connected to the tab connection portion of the fourth current collecting member; and
the first current collecting member and the third current collecting member are located within the first accommodation space, while the second current collecting member and the fourth current collecting member are located within the second accommodation space. In this arrangement, the tabs of the battery cells can be smoothly connected to the current collecting members.

In an embodiment, the battery cells in the first battery cell group have an equal width, the battery cells in the second battery cell group have an equal width, and the width of the battery cells in the second battery cell group is not equal to the width of the battery cells in the first battery cell group. In this arrangement, the space of the battery unit in the height direction and width direction is fully used, thereby further improving the space utilization and energy density.

In an embodiment, the battery cells have an equal width. In addition to improving the space utilization and energy density, this arrangement facilitates production and processing of battery cells, thereby helping reduce production costs.

In an embodiment, the battery unit further includes an insulating member, where the insulating member is provided at a side of the top of the housing facing towards the battery cells, the insulating member includes an insulating body and a support portion, the support portion protrudes from a side of the insulating body facing toward the battery cell, and the support portion abuts against the main body of the battery cell to separate a side of the insulating body facing towards the battery cells from the battery cells. In this arrangement, the insulating member plays a role of insulation. In addition, a space accommodating the tab can be formed on a side of the insulating member facing towards the battery cell.

In an embodiment, the support portion is stepped and includes multiple step portions, step portions corresponding to battery cells of different heights have differently sized parts protruding from the side of the insulating body facing towards the battery cells, so that the step portions all abut against main bodies of the corresponding battery cells. In this arrangement, the step portions can all abut against main bodies of the corresponding battery cells so that the step portions play a good role in supporting.

In an embodiment, the housing includes a housing body and an end cover, where a cavity with an opening is provided in the housing body, the end cover covers the opening of the cavity, the end cover is the top of the housing, the battery cells are accommodated in the cavity, and the electrode terminals are provided on the end cover. In this arrangement, the housing body and end cover can be removed, thereby facilitating quick mounting and dismounting of the battery cells. In this arrangement,

A battery includes the foregoing battery unit. The battery can feature improved space utilization and energy density.

An electric device includes the foregoing battery. The electric device can feature improved endurance.

A manufacturing method of the foregoing battery unit includes: providing a housing, where electrode terminals are provided at the top of the housing; providing multiple battery cells, where at least two of the battery cells have different heights, and each of the battery cells includes a main body and tabs connected to the main body; providing current collecting members including tab connection portions and terminal connection portions; connecting the tab connection portion to the tab; connecting the terminal connection portion to the electrode terminal; and accommodating the multiple battery cells within the housing in a way that the current collecting members are provided within an accommodation space formed by a main body of a shortest battery cell and the top of the housing. In the manufacturing method of the battery unit, the at least two battery cells have a height difference. Providing the current collecting members within the accommodation space formed by the main body of the shortest battery cell and the top of the housing can make full use of the space of the battery unit in the height direction, thereby improving the space utilization and energy density.

### BRIEF DESCRIPTION OF DRAWINGS

FIG. 1 is a schematic diagram of an electric device according to an embodiment;
FIG. 2 is a schematic diagram of battery unit combination according to an embodiment;
FIG. 3 is an exploded view of the battery unit in FIG. 2;
FIG. 4 is a cross-sectional view of a first embodiment of the battery unit in FIG. 2 along line A-A;
FIG. 5 is a cross-sectional view of a second embodiment of the battery unit in FIG. 2 along line A-A;
FIG. 6 is a cross-sectional view of a third embodiment of the battery unit in FIG. 2 along line A-A;
FIG. 7 is a cross-sectional view of the battery unit in FIG. 2 along line B-B; and
FIG. 8 is a schematic diagram of a manufacturing method of a battery unit.

Reference signs:
10. vehicle; 11. controller; 12. motor; 20. battery; 100. housing; 101. accommodation space; 102. first accommodation space; 103. second accommodation space; 110. housing body; 111. cavity; 120. end cover; 200. electrode terminal; 210. positive electrode terminal; 220. negative electrode terminal; 300. battery cell; 300a. first battery cell; 300b. second battery cell; 300c. third battery cell; 300d. fourth battery cell; 301. first battery cell group; 302. second battery cell group; 310. main body; 320. electrode tab; 321. positive electrode tab; 322. negative electrode tab; 400. current collecting member; 410. electrode tab connection portion; 420. terminal connection portion; 500. insulating member; 510. insulating body; and 520. support portion.

### DESCRIPTION OF EMBODIMENTS

To make the objectives, features and advantages of this application more comprehensible, the following further describes specific implementations of this application in detail with reference to the accompanying drawings. In the following descriptions, numerous specific details are set forth in order to provide a thorough understanding of this application. However, this application can be implemented in many different ways other than those described herein, and those skilled in the art can make similar improvements without departing from the essence of this application. Therefore, this application is not limited by the specific embodiments disclosed below.

In the descriptions of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of this application and simplify the descriptions, are not intended to indicate or imply that the apparatuses or components mentioned must have specific orientations, or be constructed and operated for a specific orientation, and therefore shall not be construed as a limitation to this application.

In addition, the terms "first" and "second" are merely for the purpose of description, and shall not be understood as any indication or implication of relative importance or any implicit indication of the number of technical features indicated. Therefore, a feature defined by "first" or "second" may explicitly or implicitly include at least one such feature. In the description of this application, "a plurality of means at least two unless otherwise specifically stated, for example two or three.

In the description of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements, unless otherwise specifically stated. Persons of ordinary skills in the art can understand specific meanings of these terms in this application as appropriate to specific situations.

In the description this application, unless otherwise expressly specified and defined, the first feature being "above" or "below" the second feature may mean that the first feature is in direct contact with the second feature or may mean that the first feature and the second feature come into contact indirectly through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

It should be noted that when a component is referred to as being "fastened to" or "provided on" another component, it may be directly fastened to the another component, or there may be a component in between. When a component is deemed as being "connected to" another component, it may be directly connected to the another component, or there may be a component in between. The terms "vertical", "horizontal", "above", "below", "left", "right", and other similar expressions as used herein are for illustration only instead of indicating the only embodiment.

With popularization and promotion of new energy vehicles, charge and discharge performance, endurance, and the like of new energy vehicles have attracted increasing attention. Electric vehicle batteries are rechargeable batteries that serve as power source for new energy vehicles and are widely used in the field of new energy vehicles.

A battery or battery unit usually includes a housing, electrode terminals, battery cells, and current collecting members. The electrode terminals are provided at the top of the housing. The battery cells are accommodated within the housing. Each of the battery cells includes a main body and tabs connected to the main body. The current collecting members include tab connection portions and terminal connection portions, where the tab connection portion is configured to connect to the tab, and the terminal connection portion is configured to connect to the electrode terminal.

However, the inventors have found that the current collecting members and the connection between the current collecting members and the tabs and/or electrode terminals require a certain space between the main body of the battery cell and the top of the housing. As the number of battery cells increases, the space wasted in accommodating the current collecting members also increases.

In view of the above considerations, after in-depth research, the inventors have designed a battery unit with high space utilization and energy density. When a housing of a battery unit accommodates multiple battery cells, current collecting members are provided above main bodies of some battery cells, and the height of remaining battery cells is increased. This creates a height difference between at least two battery cells, and the current collecting members are provided within an accommodation space formed by a main body of a shorter battery cell and the top of the housing. This avoids low space utilization inside the housing due to uniform sizes of the multiple battery cells, reducing energy density loss.

It should be noted that the battery in this application is a single physical module that includes one or more battery units for providing a higher voltage and capacity. For example, the battery mentioned in this application may include a battery module, a battery pack, or the like. A battery typically includes a box configured to enclose one or more battery units. The box can prevent liquids or other foreign matter from affecting charging or discharging of the battery unit.

To meet different power requirements, the battery may include multiple battery units, and the multiple battery units may be connected in series, parallel, or series-parallel, where being connected in series-parallel means a combination of series and parallel connections. Optionally, the multiple battery units may be connected in series, parallel, or series-parallel to form battery modules first, and then multiple battery modules are connected in series, parallel, or series-parallel to form a battery. In a word, the multiple battery units may be directly combined into a battery, or may first be combined into battery modules that are then combined into a battery. The battery is further provided in an electric device to supply electrical energy to the electric device.

In this application, the battery unit may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery unit may be cylindrical, flat, cuboid, or of other shapes, which is not limited in the embodiments of this application either. Battery units are typically divided into three types by packaging method: cylindrical battery unit, prismatic battery unit, and pouch battery unit. The type of battery is not limited in the embodiments of this application either.

The battery unit includes an electrode assembly and an electrolyte. The electrode assembly includes a positive electrode plate, a negative electrode plate, and a separator. Working of the battery unit mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of PP (polypropylene, polypropylene), PE (polyethylene, polyethylene), or the like. In addition, the electrode assembly may be a winding structure or a laminated structure, but the embodiments of this application are not limited thereto.

This application provides an electric device that uses a battery as a power source. The electric device may be but is not limited to a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, an example that the electric device is a vehicle 10 in an embodiment of this application is used for description in the following embodiments.

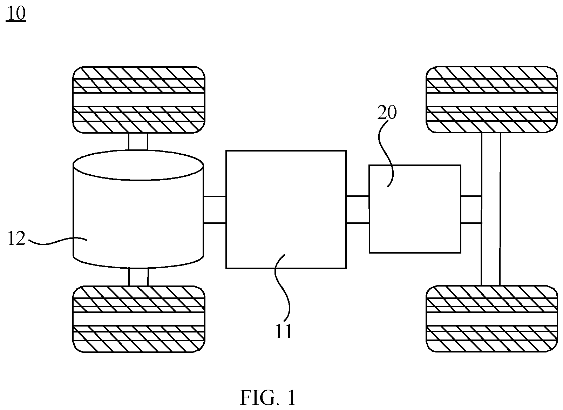

Referring to FIG. 1, FIG. 1 is a schematic structural diagram of a vehicle 10 according to some embodiments of this application. The vehicle 10 may be a fossil fuel vehicle, a natural-gas vehicle, or a new energy vehicle, where the new energy vehicle may be a battery electric vehicle, a hybrid electric vehicle, a range-extended vehicle, or the like. The vehicle 10 is provided with a battery 20 inside, where the battery 20 may be disposed at the bottom, front, or rear of the vehicle 10. The battery 20 may be configured to supply power to the vehicle 10. For example, the battery 20 may be used as an operational power source for the vehicle 10. The vehicle 10 may further include a controller 11 and a motor 12, where the controller 11 is configured to control the battery 20 to supply power to the motor 12, for example, to satisfy power needs of start, navigation, and driving of the vehicle 10.

In some embodiments of this application, the battery 20 can be used as not only the operational power source for the vehicle 10 but also a driving power source for the vehicle 10, replacing all or part of the fossil fuel or the natural gas to provide driving power for the vehicle 10.

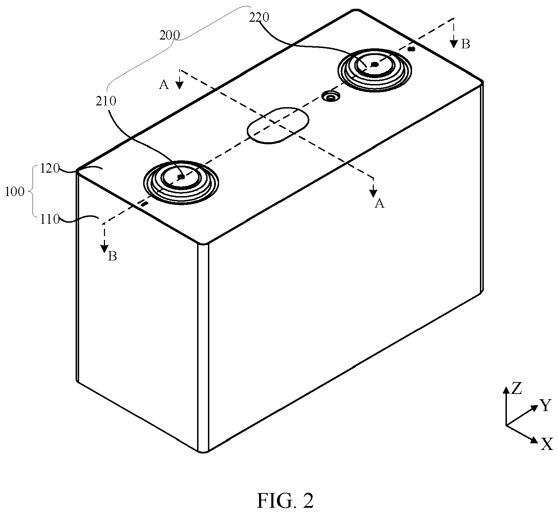

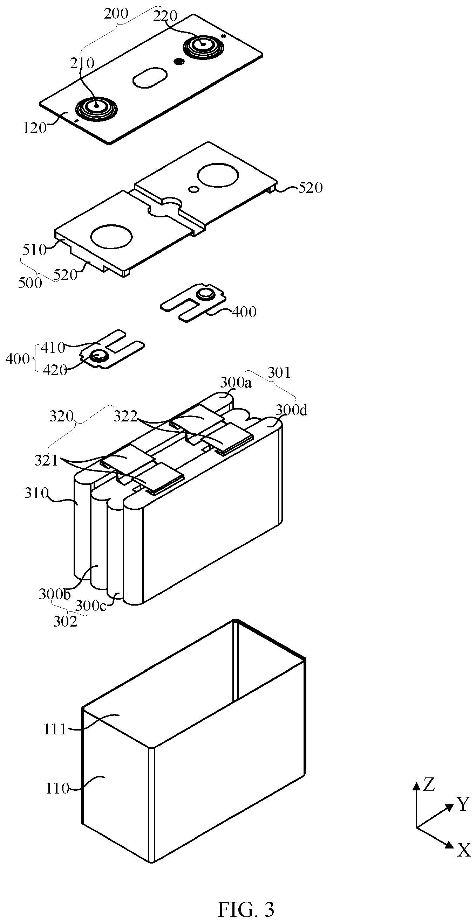

Refer to FIG. 2 and FIG. 3. A battery unit in an embodiment includes a housing 100, electrode terminals 200, multiple battery cells 300, and current collecting members 400. The electrode terminals 200 are provided at the top of the housing 100, and the multiple battery cells 300 are accommodated within the housing 100. Each of the battery cells 300 includes a main body 310 and tabs 320 connected to the main body 310. The current collecting members 400 include tab connection portions 410 and terminal connection portions 420, where the tab connection portion 410 is configured to connect to the tab 320, and the terminal connection portion 420 is configured to connect to the electrode terminal 200;
where at least two of the battery cells 300 have different heights, and the current collecting members 400 are provided within an accommodation space 101 formed by a main body 310 of a shortest battery cell 300 and the top of the housing 100.

In this arrangement, the at least two battery cells 300 have a height difference. Providing the current collecting members 400 within the accommodation space 101 formed by the main body 310 of the shortest battery cell 300 and the top of the housing 100 can make full use of the space of the battery unit in the height direction, thereby improving the space utilization and energy density.

It should be noted that height refers to the size in the direction Z as shown in FIG. 2, width refers to the size in the direction X as shown in FIG. 2, and length refers to the size in the direction Y as shown in FIG. 2.

In specific embodiments, as shown in FIG. 3, the tabs 320 include positive electrode tabs 321 and negative electrode tabs 322 spaced along the length direction of housing 100. Each battery cell 300 has a positive electrode tab 321 and a negative electrode tab 322. The electrode terminals 200 include a positive electrode terminal 210 and a negative electrode terminal 220 spaced along the length direction of housing 100. The positive electrode terminal 210 is connected to the positive electrode tab 321 through one current collecting member 400, and the negative electrode terminal 220 is connected to the negative electrode tab 322 through another current collecting member 400.

In this embodiment, as shown in FIG. 3, the tab 320 extends from the top of the main body 310. In other words, the tab 320 and the main body 310 are an integral structure. In other embodiments, the tab 320 may alternatively be connected to the top of the main body 310 through welding.

In this embodiment, as shown in FIG. 3, the tab connection portion 410 is U-shaped, and the terminal connection portion 420 is circular. The terminal connection portion 420 and the tab connection portion 410 may be on a same plane or different planes. In other embodiments, the tab connection portion 410 may alternatively be circular, rectangular, or of another shape, and the terminal connection portion 420 may alternatively be rectangular or of another shape.

In this embodiment, as shown in FIG. 3, the tab connection portion 410 is fixedly connected to the terminal connection portion 420. In another embodiment, the terminal connection portion 420 may alternatively be connected to the tab connection portion 4100 via a fuse portion or a transitional portion.

Refer to FIG. 3. The battery cells 300 are arranged side by side along a width direction of the housing 100, two outermost battery cells 300 belong to a first battery cell group 301, and battery cells 300 between the two outermost battery cells 300 belong to a second battery cell group 302.

In this arrangement, the battery cells 300 are arranged side by side in the same direction, reducing the space occupied and helping to improve the space utilization of the housing 100.

In this embodiment, the battery cells 300 are arranged side by side along the width direction (that is, the direction X shown in FIG. 3) of the housing 100. In another embodiment, the battery cells 300 may alternatively be arranged side by side along the length direction (that is, the direction Y shown in FIG. 3) of the housing 100.

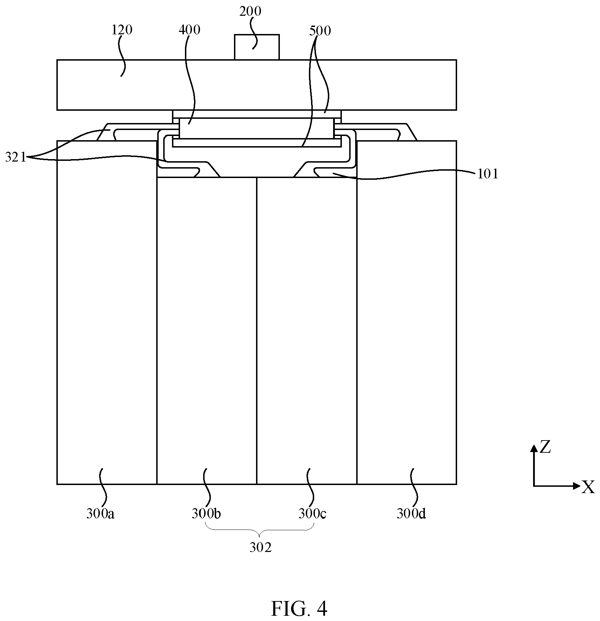

Referring to FIG. 3 and FIG. 4, the battery cells 300 in the first battery cell group 301 have an equal height, the battery cells 300 in the second battery cell group 302 have an equal height, and the height of the second battery cell group 302 is not equal to the height of the first battery cell group 301.

It can be understood that battery cells 300 of the same size can be processed by using the same processing device and auxiliary fixtures. In the foregoing arrangement, there is a height difference between the two groups of battery cells 300. Providing the current collecting members 400 within the accommodation space 101 formed by the shorter group of battery cells 300 and the top of the housing 100 can improve the space utilization and energy density of the battery unit, and facilitates production and processing of battery cells 300 in a same group of battery cells 300, thereby helping to reduce processing costs.

When the absolute value of the height difference between the two groups of battery cells 300 is too large, although the size of the accommodation space 101 for accommodating the current collecting members 400 is increased, this leads to an excessively large volume of the battery unit, occupying much space. When the absolute value of the height difference between the two groups of battery cells 300 is too small, although the overall volume of the battery unit can be reduced, this leads to an excessively small accommodation space 101 for accommodating the current collecting members 400, making it unable to accommodate the current collecting members 400.

Based on the above considerations, in the embodiment in FIG. 4, an absolute value of a height difference between the second battery cell group 302 and the first battery cell group 301 is at most 20 mm. In this arrangement, the accommodation space 101 can effectively accommodate the current collecting members 400, and the overall volume of the battery unit is not excessively large.

For example, in some embodiments, an absolute value of a height difference between the second battery cell group 302 and the first battery cell group 301 is 10 mm. In some other embodiments, an absolute value of a height difference between the second battery cell group 302 and the first battery cell group 301 is 5 mm.

In other embodiments, an absolute value of a height difference between the second battery cell group 302 and the first battery cell group 301 may alternatively be designed to another value depending on an actual need.

It should be noted here that the absolute value of the height difference refers to the absolute value of the height of the second battery cell group 302 minus the height of the first battery cell group 301.

In an embodiment shown in FIG. 4, the height of the second battery cell group 302 is lower than the height of the first battery cell group 301, and the current collecting member 400 is positioned within the accommodation space 101 formed by the second battery cell group 302 and the top of the housing 100.

It should be noted herein that the height of each battery cell 300 in the second battery cell group 302 is a normal height H, and the height of each battery cell 300 in the first battery cell group 301 is a height H1 increased from the normal height H. The difference between H1 and H is at most 20 mm.

In the foregoing arrangement, providing the current collecting members 400 within the accommodation space 101 formed by the second battery cell group 302 and the top of the housing 100 can make full use of the space of the battery unit in the height direction, thereby improving the space utilization and energy density.

Specifically, as shown in FIG. 4 and FIG. 3, the positive electrode tab 321 of the battery cell 300 is bent and connected to the tab connection portion 410 of one current collecting member 400, and the negative electrode tab 322 of the battery cell 300 is bent and connected to the tab connection portion 410 of another current collecting member 400, with the two current collecting members 400 spaced along the length direction of the housing 100. In this arrangement, the tabs 320 of the battery cells 300 can be smoothly connected to the current collecting members 400.

For example, as shown in FIG. 4 and FIG. 3, the multiple battery cells 300 include a first battery cell 300a, a second battery cell 300b, a third battery cell 300c, and a fourth battery cell 300d. The first battery cell 300a, the second battery cell 300b, the third battery cell 300c, and the fourth battery cell 300d are arranged side by side along the width direction of the housing 100. The outermost first battery cell 300a and fourth battery cell 300d form the first battery cell group 301, and the second battery cell 300b and the third battery cell 300c between the outermost first battery cell 300a and fourth battery cell 300d form the second battery cell group 302. The first battery cell 300a and the fourth battery cell 300d have an equal height, and the second battery cell 300b and the third battery cell 300c have an equal height. The height of the second battery cell 300b and the third battery cell 300c is lower than the height of the first battery cell 300a and the fourth battery cell 300d.

Positive electrode tabs 321 of the first battery cell 300a, second battery cell 300b, third battery cell 300c, and fourth battery cell 300d are bent and connected to the tab connection portion 410 of one current collecting member 400. Negative electrode tabs 322 of the first battery cell 300a, second battery cell 300b, third battery cell 300c, and fourth battery cell 300d are bent and connected to the tab connection portion 410 of another current collecting member 400. The two current collecting members 400 are provided within the accommodation space 101 formed by the second battery cell 300b and third battery cell 300c and the top of the housing 100.

A positive electrode terminal 210 and a negative electrode terminal 220 are provided. The terminal connection portion 420 of one current collecting member 400 is connected to the positive electrode terminal 210, and the terminal connection portion 420 of another current collecting member 400 is connected to the negative electrode terminal 220.

It should be noted that, as shown in FIG. 4 and FIG. 3, the positive electrode tabs of the first battery cell 300a and second battery cell 300b are bent and gathered together, and the positive electrode tabs of the third battery cell 300c and fourth battery cell 300d are bent and gathered together, with the two positive electrode tabs gathered symmetrically arranged. The negative electrode tabs of the first battery cell 300a and second battery cell 300b are bent and gathered together, and the negative electrode tabs of the third battery cell 300c and fourth battery cell 300d are bent and gathered together, with the two negative electrode tabs gathered symmetrically arranged.

In the foregoing arrangement, the tabs are gathered in pairs and then symmetrically arranged, and connected to the two tab connection portions 410 of the current collecting members 400. This reduces the overall thickness of the tabs as compared with four tabs being gathered together, thereby reducing the risk of virtual welding and occupied space.

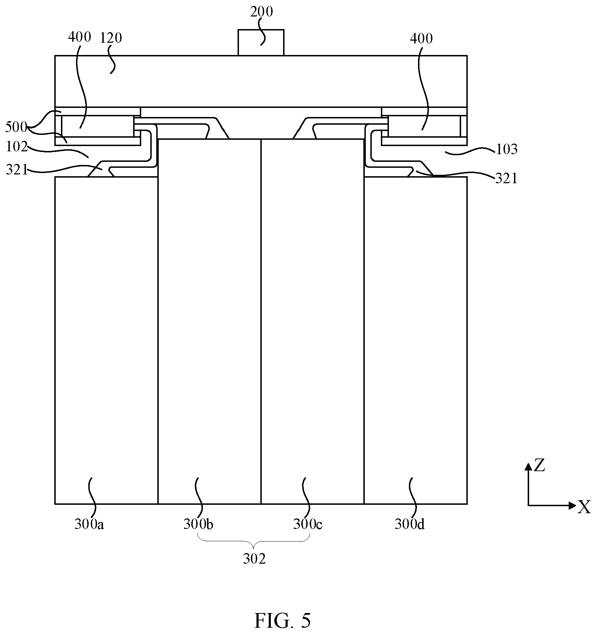

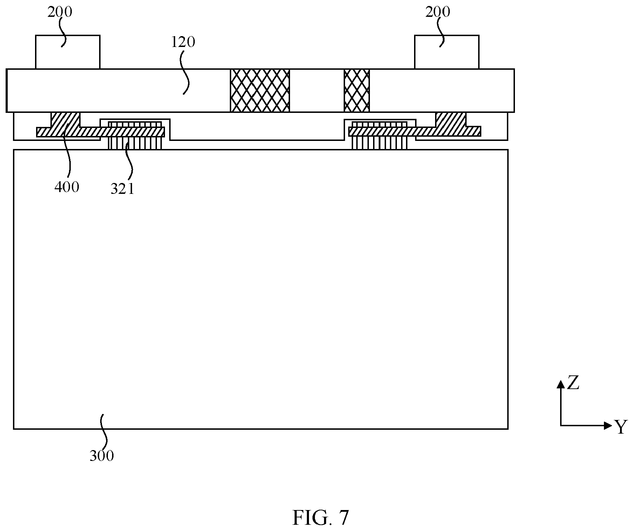

In another embodiment shown in FIG. 5 and FIG. 7, the height of the second battery cell group 302 is higher than the height of the first battery cell group 301. The current collecting members 400 are provided within the accommodation space 101 formed by the first battery cell group 301 and the top of the housing 100. In addition, the accommodation space 101 is divided into a first accommodation space 102 and a second accommodation space 103 by the first battery cell group 301.

It should be noted herein that the height of each battery cell 300 in the first battery cell group 301 is a normal height H, and the height of each battery cell 300 in the second battery cell group 302 is a height H2 increased from the normal height H. The difference between H2 and H is at most 20 mm.

In the foregoing arrangement, providing the current collecting members 400 within the accommodation space 101 formed by the first battery cell group 301 and the top of the housing 100 can make full use of the space of the battery unit in the height direction, thereby improving the space utilization and energy density.

It can be understood that the battery cells 300 are arranged side by side along the width direction of the housing 100. The outermost two battery cells 300 are the first battery cell group 301. The first accommodation space 102 is formed by one battery cell 300 in the outermost two battery cells 300 and the top of the housing 100, and the second accommodation space 103 is formed by the other battery cell 300 in the outermost two battery cells 300 and the top of the housing 100.

Specifically, in this embodiment, as shown in FIG. 5 and FIG. 3, the current collecting members 400 include a first current collecting member, a second current collecting member, a third current collecting member, and a fourth current collecting member, where positive electrode tabs 321 of some battery cells 300 are bent and connected to the tab connection portion 410 of the first current collecting member, positive electrode tabs 321 of the remaining battery cells 300 are bent and connected to the tab connection portion 410 of the second current collecting member, negative electrode tabs 322 of some battery cells 300 are bent and connected to the tab connection portion 410 of the third current collecting member, and negative electrode tabs 322 of the remaining battery cells 300 are bent and connected to the tab connection portion 410 of the fourth current collecting member. The first current collecting member and the third current collecting member are located within the first accommodation space 102, while the second current collecting member and the fourth current collecting member are located within the second accommodation space 103. In this arrangement, the tabs 320 of the battery cells 300 can be smoothly connected to the current collecting members 400.

For example, as shown in FIG. 5 and FIG. 3, the multiple battery cells 300 include a first battery cell 300a, a second battery cell 300b, a third battery cell 300c, and a fourth battery cell 300d. The first battery cell 300a, the second battery cell 300b, the third battery cell 300c, and the fourth battery cell 300d are arranged side by side along the width direction of the housing 100. The outermost first battery cell 300a and fourth battery cell 300d form the first battery cell group 301, and the second battery cell 300b and the third battery cell 300c between the outermost first battery cell 300a and fourth battery cell 300d form the second battery cell group 302. The first battery cell 300a and the fourth battery cell 300d have an equal height, and the second battery cell 300b and the third battery cell 300c have an equal height. The height of the second battery cell 300b and the third battery cell 300c is higher than the height of the first battery cell 300a and the fourth battery cell 300d.

Positive electrode tabs 321 of the first battery cell 300a and second battery cell 300b are bent and connected to the tab connection portion 410 of the first current collecting member, positive electrode tabs 321 of the third battery cell 300c and fourth battery cell 300d are bent and connected to the tab connection portion 410 of the second current collecting member, negative electrode tabs 322 of the first battery cell 300a and second battery cell 300b are bent and connected to the tab connection portion 410 of the third current collecting member, and negative electrode tabs 322 of the third battery cell 300c and fourth battery cell 300d are bent and connected to the tab connection portion 410 of the fourth current collecting member. The first current collecting member and the third current collecting member are located within the first accommodation space 102, while the second current collecting member and the fourth current collecting member are located within the second accommodation space 103.

Two positive electrode terminals 210 and two negative electrode terminals 220 are so provided that the terminal connection portion 420 of the first current collecting member is connected to one positive electrode terminal 210, the terminal connection portion 420 of the second current collecting member is connected to the other positive electrode terminal 210, the terminal connection portion 420 of the third current collecting member is connected to one negative electrode terminal 220, and the terminal connection portion 420 of the fourth current collecting member is connected to the other negative electrode terminal 220, thereby achieve electrical connection between the tabs 320 and the electrode terminals 200. Alternatively, one positive electrode terminal 210 and one negative electrode terminal 220 are so provided that the terminal connection portion 420 of the first current collecting member and the terminal connection portion 420 of the second current collecting member are connected to a common current collecting member, and one common current collecting member is connected to one positive electrode terminal 210, the terminal connection portion 420 of the third current collecting member is connected to the terminal connection portion 420 of the fourth current collecting member through another common current collecting member, and the other common current collecting member is connected to one negative electrode terminal 220, to achieve electrical connection between the tabs 320 and the electrode terminals 200.

The inventors have noted that the width of each battery cell 300 affects the capacity and volume of the battery unit. Therefore, in the design of the battery unit, the width of each battery cell 300 should also be considered.

In an embodiment, as shown in FIG. 4 and FIG. 5, the battery cells 300 have an equal width.

In this embodiment, as shown in FIG. 4 and FIG. 5, the battery cells 300 all have an equal width, but at least two battery cells 300 have unequal heights. In addition to improving the space utilization and energy density, this arrangement facilitates production and processing of battery cells 300, thereby helping reduce production costs.

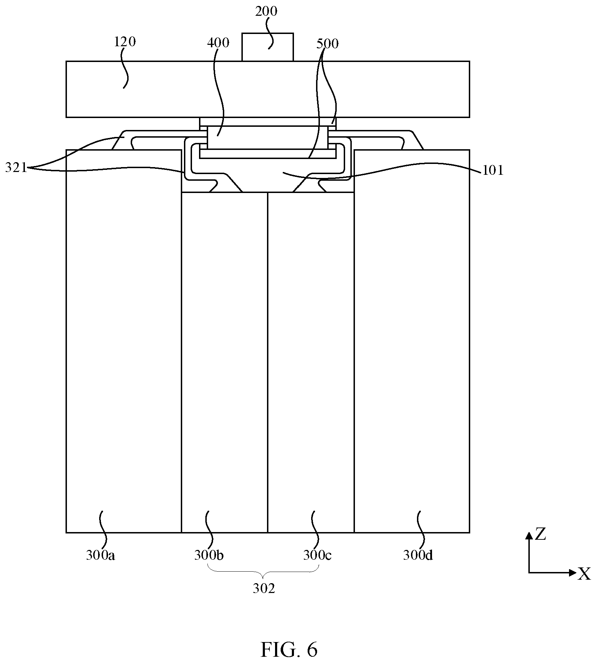

In another embodiment, as shown in FIG. 6, the battery cells 300 in the first battery cell group 301 have an equal width, the battery cells 300 in the second battery cell group 302 have an equal width, and the width of the battery cells 300 in the second battery cell group 302 is not equal to the width of the battery cells 300 in the first battery cell group 301.

In this embodiment, as shown in FIG. 6, the widths of the battery cells 300 in the two groups of battery cells 300 are unequal, and the heights of the two groups of battery cells 300 are unequal. In this arrangement, the space of the battery unit in the height direction and width direction is fully used, thereby further improving the space utilization and energy density.

Specifically, in an embodiment, referring to FIG. 6, the width of each battery cell 300 in the second battery cell group 302 is larger than the width of each battery cell 300 in the first battery cell group 301. Preferably, the width of each battery cell 300 in the second battery cell group 302 is 1.1 to 2 times the width of each battery cell 300 in the first battery cell group 301.

For example, the multiple battery cells 300 include a first battery cell 300a, a second battery cell 300b, a third battery cell 300c, and a fourth battery cell 300d. The first battery cell 300a, the second battery cell 300b, the third battery cell 300c, and the fourth battery cell 300d are arranged side by side along the width direction of the housing 100. The outermost first battery cell 300a and fourth battery cell 300d form the first battery cell group 301, and the second battery cell 300b and the third battery cell 300c between the outermost first battery cell 300a and fourth battery cell 300d form the second battery cell group 302.

The first battery cell 300a and the fourth battery cell 300d have an equal width, the second battery cell 300b and the third battery cell 300c have an equal width, and the width of the second battery cell 300b and third battery cell 300c is larger than the width of the first battery cell 300a and the fourth battery cell 300d. The first battery cell 300a and the fourth battery cell 300d have an equal height, the second battery cell 300b and the third battery cell 300c have an equal height, and the height of the second battery cell 300b and the third battery cell 300c is higher than or lower than the height of the first battery cell 300a and the fourth battery cell 300d.

Specifically, in another embodiment, referring to FIG. 6, the width of each battery cell 300 in the second battery cell group 302 is smaller than the width of each battery cell 300 in the first battery cell group 301. Preferably, the width of each battery cell 300 in the second battery cell group 302 is 0.3 to 0.9 times the width of each battery cell 300 in the first battery cell group 301.

For example, the multiple battery cells 300 include a first battery cell 300a, a second battery cell 300b, a third battery cell 300c, and a fourth battery cell 300d. The first battery cell 300a, the second battery cell 300b, the third battery cell 300c, and the fourth battery cell 300d are arranged side by side along the width direction of the housing 100. The outermost first battery cell 300a and fourth battery cell 300d form the first battery cell group 301, and the second battery cell 300b and the third battery cell 300c between the outermost first battery cell 300a and fourth battery cell 300d form the second battery cell group 302.

The first battery cell 300a and the fourth battery cell 300d have an equal width, the second battery cell 300b and the third battery cell 300c have an equal width, and the width of the second battery cell 300b and the third battery cell 300c is smaller than the width of the first battery cell 300a and the fourth battery cell 300d. The first battery cell 300a and the fourth battery cell 300d have an equal height, the second battery cell 300b and the third battery cell 300c have an equal height, and the height of the second battery cell 300b and the third battery cell 300c is higher than or lower than the height of the first battery cell 300a and the fourth battery cell 300d.

In an embodiment shown in FIG. 3, the battery unit further includes an insulating member 500, where the insulating member 500 is provided at a side of the top of the housing 100 facing towards the battery cells 300.

In this embodiment, as shown in FIG. 3, the insulating member 500 includes an insulating body 510 and a support portion 520, the support portion 520 protrudes from a side of the insulating body 510 facing toward the battery cell 300, and the support portion 520 abuts against the main body 310 of the battery cell 300 to separate a side of the insulating body 510 facing towards the battery cells 300 from the battery cells 300. In this arrangement, the insulating member 500 plays the role of insulation. In addition, a space accommodating the tab 320 can be formed on a side of the insulating member 500 facing towards the battery cell 300.

In this embodiment, the insulating member 500 is a plastic member. The insulating body 510 and the support portion 520 are integrally formed through injection molding, which allows for good integrity and ease of processing. In other embodiments, the insulating body 510 and the support portion 520 may alternatively be separate structures.

In this embodiment, multiple support portions 520 are provided, and the multiple support portions 520 are spaced on one side of the insulating body 510 facing towards the battery cell 300. In other embodiments, one support portion 520 may alternatively be provided, and the support portion 520 is provided protruding from an edge of a side of the insulating body 510 facing towards the battery cell 300.

Specifically, in this embodiment, as shown in FIG. 3, the support portion 520 is stepped and includes multiple step portions, step portions corresponding to battery cells 300 of different heights have differently sized parts protruding from the side of the insulating body 510 facing towards the battery cells 300, so that the step portions all abut against main bodies 310 of the corresponding battery cells 300.

In this arrangement, the step portions can all abut against main bodies 310 of the corresponding battery cells 300 so that the step portions play a good role in supporting.

In this embodiment, the step portions are flat on a side facing towards the main body 310 of the battery cell 300, so as to better abut against the main body 310 of the battery cell 300. In other embodiments, a side of the step portions facing towards the main body 310 of the battery cell 300 may alternatively be arc-shaped or of another shape.

As shown in the embodiment of FIG. 3, the housing 100 includes a housing body 110 and an end cover 120, where a cavity 111 with an opening is provided in the housing body 110, the end cover 120 covers the opening of the cavity 111, the end cover 120 is the top of the housing 100, the battery cells 300 are accommodated in the cavity 111, and the electrode terminals 200 are provided on the end cover 120.

In this arrangement, the housing body 110 and end cover 120 can be removed, thereby facilitating quick mounting and dismounting of the battery cells 300.

In this embodiment, the housing body 110 and the end cover 120 are fixedly connected through welding, allowing for high mechanical strength, so that it is unlikely for them to fall off. In other embodiments, the housing body 110 and the end cover 120 may alternatively be detachably connected through snap-fit or buckling, or the housing body 110 and the end cover 120 may be an integral structure.

In this embodiment, the housing body 110 is rectangular, and the end cover 120 is rectangular. In other embodiments, the housing body 110 and the end cover 120 may alternatively have another shape.

Referring to FIG. 2, a battery 20 in an embodiment includes the foregoing battery unit. This arrangement can improve the energy density of the battery 20.

Referring to FIG. 1, an electric device in an embodiment includes the foregoing battery 20, where the battery 20 is configured to provide electrical energy. In this arrangement, the endurance of the electric device can be improved.

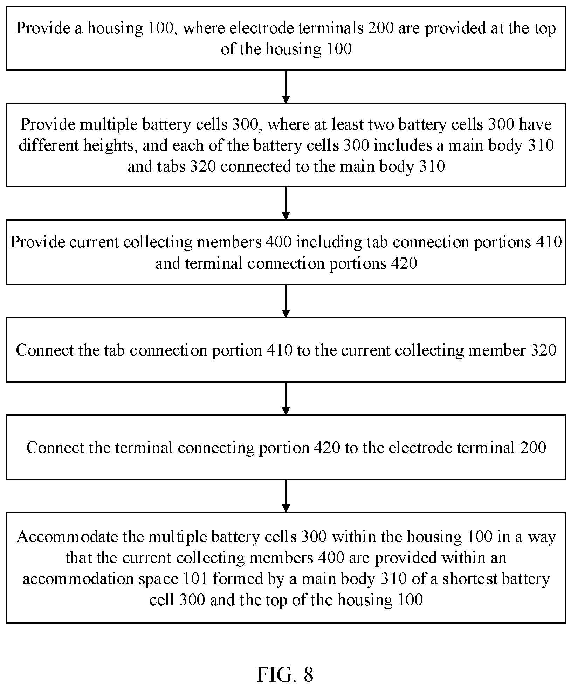

Referring to FIG. 8, a manufacturing method of a battery unit in an embodiment includes the following steps:
Provide a housing 100, where electrode terminals 200 are provided at the top of the housing 100.

Provide multiple battery cells 300, where at least two of the battery cells 300 have different heights, and each of the battery cells 300 includes a main body 310 and tabs 320 connected to the main body 310.

Provide current collecting members 400 including tab connection portions 410 and terminal connection portions 420.

Connect the tab connection portion 410 to the tab 320.

Connect the terminal connection portion 420 to the electrode terminal 200.

Accommodate the multiple battery cells 300 within the housing 100 in a way that the current collecting members 400 are provided within an accommodation space 101 formed by a main body 310 of a shortest battery cell 300 and the top of the housing 100.

In the foregoing steps, the at least two battery cells 300 have a height difference. Providing the current collecting members 400 within the accommodation space 101 formed by the main body 310 of the shortest battery cell 300 and the top of the housing 100 can make full use of the space of the battery unit in the height direction, thereby improving the space utilization and energy density.

In an embodiment shown in FIG. 8, in the manufacturing method of a battery unit, the tab connection portion 410 and the tabs 320 are connected through welding, and the terminal connection portion 420 and the electrode terminals 200 are connected through welding. After welding, it is necessary to remove the welding slag.

In this embodiment shown in FIG. 8, in the manufacturing method of a battery unit, the multiple battery cells 300 are accommodated within the housing body 110 of the housing 100, and then the end cover 120 is welded to the top of the housing body 110.

According to some embodiments of this application, referring to FIG. 1, this application provides a battery unit including a housing 100, electrode terminals 200, multiple battery cells 300, and current collecting members 400. The electrode terminals 200 are provided on the top of the housing 100, and the multiple battery cells 300 are accommodated in the housing 100. Each battery cell 300 includes a main body 310 and tabs 320 connected to the main body 310. The current collecting member 400 includes a tab connection portion 410 and a terminal connection portion 420, where the tab connection portion 410 is configured to connect to the tab 320, and the terminal connection portion 420 is configured to connect to the electrode terminal 200. The multiple battery cells 300 include a first battery cell 300a, a second battery cell 300b, a third battery cell 300c, and a fourth battery cell 300d. The first battery cell 300a, the second battery cell 300b, the third battery cell 300c, and the fourth battery cell 300d are arranged side by side along a width direction of the housing 100. The first battery cell 300a and the fourth battery cell 300d have an equal width and height, the second battery cell 300b and the third battery cell 300c have an equal width and height, and the height of the first battery cell 300a and the fourth battery cell 300d is higher than or lower than the height of the second battery cell 300b and the third battery cell 300c.

According to some embodiments of this application, referring to FIG. 2, this application provides a battery 20 including the foregoing battery unit.

According to some embodiments of this application, referring to FIG. 1, this application provides an electric device of a battery 20 including the foregoing battery 20.

According to some embodiments of this application, referring to FIG. 2 and FIG. 3, this application provides a manufacturing method of a battery unit including the following steps: providing a housing 100, where electrode terminals 200 are provided at the top of the housing 100; providing multiple battery cells 300, where at least two of the battery cells 300 have different heights, and each of the battery cells 300 includes a main body 310 and tabs 320 connected to the main body 310; providing current collecting members 400 including tab connection portions 410 and terminal connection portions 420; welding the tab connection portion 410 to the tab 320; welding the terminal connection portion 420 to the electrode terminal 200; and accommodating the multiple battery cells 300 within the housing 100 in a way that the current collecting members 400 are provided within an accommodation space 101 formed by a main body 310 of a shortest battery cell 300 and the top of the housing 100.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A battery unit, **characterized by** comprising:
a housing (100);
electrode terminals (200) provided at the top of the housing (100);
multiple battery cells (300) accommodated within the housing (100), wherein each of the battery cells (300) comprises a main body (310) and tabs (320) connected to the main body (310); and
current collecting members (400) comprising tab connection portions (410) and terminal connection portions (420), wherein the tab connection portion (410) is configured to connect to the tab (320), and the terminal connection portion (420) is configured to connect to the electrode terminal (200);
wherein at least two of the battery cells (300) have different heights, and the current collecting members (400) are provided within an accommodation space formed by a main body (310) of a shortest battery cell (300) and the top of the housing (100).

2. The battery unit according to claim 1, **characterized in that** the battery cells (300) are arranged side by side along a width direction of the housing (100), wherein two outermost battery cells (300) belong to a first battery cell group (301), and battery cells (300) between the two outermost battery cells (300) belong to a second battery cell group (302).

3. The battery unit according to claim 2, **characterized in that** the battery cells (300) in the first battery cell group (301) have an equal height, the battery cells (300) in the second battery cell group (302) have an equal height, and the height of the second battery cell group (302) is not equal to the height of the first battery cell group (301).

4. The battery unit according to claim 3, **characterized in that** an absolute value of a height difference between the second battery cell group (302) and the first battery cell group (301) is at most 20 mm.

5. The battery unit according to claim 3, **characterized in that** the height of the second battery cell group (302) is lower than the height of the first battery cell group (301), and the current collecting members (400) are provided within an accommodation space formed by the second battery cell group (302) and the top of the housing (100).

6. The battery unit according to claim 5, **characterized in that** the tabs (320) comprise positive electrode tabs (321) and negative electrode tabs (322) spaced along a length direction of the housing (100), wherein the positive electrode tab (321) of the battery cell (300) is bent and connected to the tab connection portion (410) of one current collecting member (400), and the negative electrode tab (322) of the battery cell (300) is bent and connected to the tab connection portion (410) of another current collecting member (400), with the two current collecting members (400) spaced along the length direction of the housing (100).

7. The battery unit according to any one of claims 3 to 6, **characterized in that** the height of the second battery cell group (302) is higher than the height of the first battery cell group (301), the current collecting members (400) are provided within an accommodation space (101) formed by the first battery cell group (301) and the top of the housing (100), and the accommodation space is divided by the first battery cell group (301) into a first accommodation space (102) and a second accommodation space (103).

8. The battery unit according to claim 7, **characterized in that** the current collecting members (400) comprise a first current collecting member, a second current collecting member, a third current collecting member, and a fourth current collecting member, and the tabs (320) comprise positive electrode tabs (321) and negative electrode tabs (322) spaced along a length direction of the housing (100); wherein positive electrode tabs (321) of some battery cells (300) are bent and connected to the tab connection portion (410) of the first current collecting member, positive electrode tabs (321) of the remaining battery cells (300) are bent and connected to the tab connection portion (410) of the second current collecting member, negative electrode tabs (322) of some battery cells (300) are bent and connected to the tab connection portion (410) of the third current collecting member, and negative electrode tabs (322) of the remaining battery cells (300) are bent and connected to the tab connection portion (410) of the fourth current collecting member; and
the first current collecting member and the third current collecting member are located within the first accommodation space (102), while the second current collecting member and the fourth current collecting member are located within the second accommodation space (103).

9. The battery unit according to any one of claims 2 to 8, **characterized in that** the battery cells (300) in the first battery cell group (301) have an equal width, the battery cells (300) in the second battery cell group (302) have an equal width, and the width of the battery cells (300) in the second battery cell group (302) is not equal to the width of the battery cells (300) in the first battery cell group (301).

10. The battery unit according to any one of claims 1 to 9, **characterized in that** the battery cells (300) have an equal width.

11. The battery unit according to any one of claims 1 to 9, **characterized in that** the battery unit further comprises an insulating member (500), wherein the insulating member (500) is provided at a side of the top of the housing (100) facing towards the battery cells (300), the insulating member (500) comprises an insulating body (510) and a support portion (520), the support portion (520) protrudes from a side of the insulating body (510) facing toward the battery cell (300), and the support portion (520) abuts against the main body (310) of the battery cell (300) to separate a side of the insulating body (510) facing towards the battery cells (300) from the battery cells (300).

12. The battery unit according to claim 11, **characterized in that** the support portion (520) is stepped and comprises multiple step portions, step portions corresponding to battery cells (300) of different heights have differently sized parts protruding from the side of the insulating body (510) facing towards the battery cells (300), so that the step portions all abut against main bodies (310) of the corresponding battery cells (300).

13. The battery unit according to any one of claims 1 to 12, **characterized in that** the housing (100) comprises a housing body (110) and an end cover (120), wherein a cavity (111) with an opening is provided in the housing body (110), the end cover (120) covers the opening of the cavity (111), the end cover (120) is the top of the housing (100), the battery cells (300) are accommodated in the cavity (111), and the electrode terminals (200) are provided on the end cover (120).

14. A battery, **characterized by** comprising the battery unit according to any one of claims 1 to 13.

15. An electric device, **characterized by** comprising the battery according to claim 14.

16. A manufacturing method of the battery unit according to any one of claims 1 to 13, **characterized by** comprising:
providing a housing (100), wherein electrode terminals (200) are provided at the top of the housing (100);
providing multiple battery cells (300), wherein at least two of the battery cells (300) have different heights, and each of the battery cells (300) comprises a main body (310) and tabs (320) connected to the main body (310);
providing current collecting members (400) comprising tab connection portions (410) and terminal connection portions (420);
connecting the tab connection portion (410) to the tab (320);
connecting the terminal connection portion (420) to the electrode terminal (200); and
accommodating the multiple battery cells (300) within the housing (100) in a way that the current collecting members (400) are provided within an accommodation space formed by a main body (310) of a shortest battery cell (300) and the top of the housing (100).
